# EUROPÄISCHE PATENTANMELDUNG

(11) **EP 3 960 334 A1**
(43) Veröffentlichungstag der Anmeldung: **02.03.2022**
(21) Anmeldenummer: 20193708.3
(22) Anmeldetag: 31.08.2020
(51) Int. Cl.: B22F 3/22, B22F 7/06, B28B 1/00, B29C 64/153, B33Y 10/00, B33Y 80/00, H02K 15/02, B22F 10/00

(54) **VERFAHREN ZUR FERTIGUNG EINER ELEKTRISCHEN MASCHINE SOWIE ANLAGE UND FAHRZEUG**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Bei dem Verfahren zur Fertigung einer elektrischen Maschine mit einem Stapel von Magnetblechen, wird ein Stapel von Grünteilen von Magnetblechen gefertigt, wobei
- ein erstes Grünteil des Stapels gedruckt wird,
- wobei auf das erste Grünteil eine Trennschicht aufgebracht wird und
- bei welchem auf das erste Grünteil mit der Trennschicht mindestens ein zweites Grünteil eines Magnetblechs gedruckt wird,
wobei anschließend die Grünteile gemeinsam gesintert werden.

Die Anlage oder das Fahrzeug weist eine elektrische Maschine auf, welche mittels eines solchen Verfahrens gefertigt ist.

## Beschreibung

Die Erfindung betrifft ein Verfahren zur Fertigung einer elektrischen Maschine mit einem Stapel von Magnetblechen sowie eine Anlage und ein Fahrzeug.

Ein neues Verfahren zur Herstellung von Magnetblechen für elektrische Maschinen stellt der Druck von Magnetblechen dar. Hierbei wird ausgehend von Metallpulvern, insbesondere von Reineisen-Pulvern, zunächst eine Druckpaste erzeugt. Nachfolgend wird diese Druckpaste dann mittels einer Drucktechnik zu einem Grünkörper (auch als Grünteil bezeichnet) in Form einer Dickschicht verarbeitet und schließlich der so entstandene Grünkörper durch thermische Behandlung, d.h. Entbinderung und Sinterung, in ein metallisches Blech überführt. Für den Einsatz in einer elektrischen Maschine müssen die einzelnen Magnetbleche anschließend mit einer Isolationsschicht versehen und zu einem Blechstapel laminiert werden.

Für einen einzigen Blechstapel können dabei mehrere tausend einzelne Magnetbleche erforderlich sein. Die dazu erforderlichen Fertigungsschritte, beispielsweise Transport, Lagerung, Beschicken und Entnahme, einer derart hohen Anzahl an Einzelkomponenten während der thermischen Prozessierung sowie ihre separate Nachbehandlung sind aufwändig und teuer.

Aufgabe der Erfindung ist es daher, ein verbessertes Verfahren zur Fertigung einer elektrischen Maschine mit einem Stapel von Magnetblechen anzugeben, welches vorzugsweise einfacher, schneller und kostengünstiger ausgeführt werden kann. Ferner ist es Aufgabe der Erfindung, eine verbesserte Anlage und ein verbessertes Fahrzeug zu schaffen.

Diese Aufgabe der Erfindung wird mit einem Verfahren mit den in Anspruch 1 angegebenen Merkmalen sowie mit einer Anlage und einem Fahrzeug mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Fertigung einer elektrischen Maschine mit einem Stapel von Magnetblechen wird ein Stapel von Grünteilen von Magnetblechen gefertigt, wobei ein erstes Grünteil des Stapels gedruckt wird, wobei auf das erste Grünteil eine Trennschicht aufgebracht wird und bei welchem auf das erste Grünteil mit der Trennschicht mindestens ein zweites Grünteil eines Magnetblechs gedruckt wird, wobei anschließend die Grünteile gemeinsam gesintert werden.

Es versteht sich, dass die Grünteile bei dem erfindungsgemäßen Verfahren Flachteile mit zwei einander abgewandten Flachseiten darstellen, wobei die Wendung "auf ein Grünteil eine Trennschicht aufgebracht wird" meint, dass die Trennschicht an oder auf eine Flachseite des Grünteils aufgebracht wird, zweckmäßig auf eine im jeweiligen Schritt des Verfahrens freie Flachseite des Grünteils.

Es versteht sich, dass das erste Grünteil und/oder die Trennschicht bevorzugt getrocknet werden können, bevor das zweite Grünteil gedruckt wird.

Mittels des erfindungsgemäßen Verfahrens können die Grünteile gemeinsam gesintert werden, sodass eine einzelne Sinterung der Grünteile und eine nachfolgende Zusammensetzung zu einem Stapel von Magnetblechen verzichtbar ist. Vielmehr kann erfindungsgemäß zunächst der Stapel von Grünteilen teilweise oder vollständig gedruckt werden und der teilweise oder vollständig gedruckte Stapel von Grünteilen anschließend gesintert werden. Folglich können die einzelnen Magnetbleche parallel gesintert werden. Insbesondere eine aufwendige Ausrichtung von gesinterten einzelnen Magnetblechen innerhalb des Stapels von Magnetblechen ist erfindungsgemäß nicht erforderlich. Mittels des erfindungsgemäßen Verfahrens lässt sich ein Stapel von Magnetblechen und folglich eine elektrische Maschine mit einem solchen Stapel von Magnetblechen daher deutlich schneller und kostengünstiger fertigen als mittels bekannter Verfahren.

Vorteilhaft müssen bei dem erfindungsgemäßen Verfahren keine einzelnen und typischerweise biegeschlaffen Grünteile separat prozessiert werden, sodass bei dem erfindungsgemäßen Verfahren der Stapel von Grünteilen und folglich auch der Stapel von Magnetblechen besonders einfach und präzise anordbar ist. Aus einer erfindungsgemäß möglichen präzisen Anordnung der Magnetbleche resultiert eine hohe elektrische Leistungsfähigkeit der mit dem erfindungsgemäßen Verfahren gefertigten elektrischen Maschine.

Zweckmäßig werden bei dem erfindungsgemäßen Verfahren die Grünteile mit einem ersten Material, vorzugsweise einem permanentmagnetischem Material oder einem Material, das nach dem Sintern permanentmagnetisches Material bildet, und/oder einem zweiten Material, vorzugsweise einem metallischen und/oder magnetisierbaren Material oder einem nach dem Sintern metallischen und/oder magnetisierbaren Material, gedruckt. Auf diese Weise lassen sich elektrische Maschinen mit entsprechenden Materialeigenschaften, insbesondere Stapel von zwei- oder mehrkomponentigen Magnetblechen, einfacher und kostengünstiger fertigen als bisher bekannt.

Bei dem Verfahren gemäß der Erfindung wird vorzugsweise auf das zweite Grünteil des Stapels abermals eine Trennschicht aufgebracht und auf das zweite Grünteil mit der Trennschicht mindestens ein weiteres Grünteil des Stapels gedruckt. Es versteht sich, dass das zweite Grünteil und/oder die Trennschicht bevorzugt getrocknet werden können, bevor ein weiteres Grünteil gedruckt wird.

In einer vorteilhaften Weiterbildung des erfindungsgemäßen Verfahrens werden die Verfahrensschritte der vorhergehend erläuterten Weiterbildung der Erfindung einer oder mehreren Wiederholungen unterzogen, wobei das weitere Grünteil jeweils an die Stelle des zweiten Grünteils tritt. D.h., es wird in dieser Weiterbildung des erfindungsgemäßen Verfahrens auf das jeweils zuletzt gedruckte Grünteil des Stapels eine Trennschicht aufgebracht und mindestens ein weiteres Grünteil des Stapels auf dieses zuletzt gedruckte Grünteil mit der Trennschicht gedruckt und so fort. Auf diese Weise kann ein Stapel mit beliebig vielen, etwa mit mehr als eintausend, Grünteilen gedruckt werden. Somit lassen sich elektrische Maschinen mit mehr als eintausend Magnetblechen einfach und kostengünstig fertigen. Entsprechend lassen sich mittels des erfindungsgemäßen Verfahrens auch besondere Anforderungen an zu fertigende elektrische Maschinen einfach erfüllen.

Zweckmäßig weisen bei dem erfindungsgemäßen Verfahren die Magnetbleche des Stapels eine n-fache Drehsymmetrie auf und bereits gedruckte Grünteile werden um einen Winkel von 360°/n oder um ein Vielfaches dieses Winkels gedreht, bevor ein weiteres Grünteil des Stapels mit ansonsten unveränderter Anordnung gedruckt wird. Bevorzugt ist das Vielfache dieses Winkels kein Teiler von n. Auf diese Weise können eventuelle Abweichungen von Prozessparametern von idealen Prozessparametern kompensiert werden. Insbesondere können etwa Dickengradienten einzelner Grünteile entlang einer Richtung über den gesamten Stapel ausgemittelt werden, sodass sich Dickenunterschiede einzelner Grünteile entlang eines gesamten Stapels nicht aufaddieren, sondern stattdessen gegenseitig kompensieren. Zudem können etwa beim Drucken der Grünteile ggf. auftretende Anisotropien entlang einer Verfahrrichtung eines Druckkopfs ausgemittelt werden, indem die Orientierung der Grünteile beim Druck kontinuierlich von Grünteil zu Grünteil geändert wird. Somit kann eine Präzision des Stapels von Magnetblechen erhöht werden und eine verbesserte Leistungsfähigkeit der erfindungsgemäß gefertigten elektrischen Maschine erreicht werden.

Vorzugsweise werden bei dem Verfahren gemäß der Erfindung eines, mehrere oder sämtliche der Grünteile mittels Sieb- und/oder Schablonendrucks gedruckt. Mittels Sieb- und/oder Schablonendrucks lässt sich eine hohe Präzision insbesondere der Form der jeweils gedruckten Grünteile erreichen, sodass erfindungsgemäß eine präzise Fertigung der elektrischen Maschine und entsprechend eine hohe Leistungsfähigkeit der elektrischen Maschine möglich sind.

Vorteilhaft wird bei dem erfindungsgemäßen Verfahren die Trennschicht vorzugsweise mit Keramikpartikeln gebildet und/oder die Trennschicht wird mit einer Grünteilbedeckung von mindestens 75 Prozent aufgetragen und/oder die Trennschicht wird mit mit Aluminiumoxid und/oder Yttriumoxid und/oder Magnesiumoxid und/oder mit Aluminiumnitrid und/oder Bornitrid und/oder YAG- und/oder Glimmermaterialien gebildet. Vorteilhaft können mit Keramikpartikeln zum einen die Grünteile und folglich auch die aus den Grünteilen resultierenden Magnetbleche auf Abstand gehalten werden. Somit lassen sich die Magnetbleche infolge des Abstands einfach voneinander isolieren. Zweckmäßig können die Keramikpartikel auch als Sinterinhibitoren dienen. Besonders bevorzugt werden Keramikpartikel mit einer bimodalen Größenverteilung eingesetzt, also mit einer Feinfraktion und einer Grobfraktion, wobei die Feinfraktion geeigneterweise die Rolle eines Sinterinhibitors übernimmt und die Grobfraktion vorzugsweise als Abstandshalter fungiert. Vorteilhaft werden Keramikpartikel mit einem mittleren Durchmesser von höchstens 5 Mikrometern eingesetzt. Die Keramikpartikel weisen bevorzugt eine sphärische Gestalt auf. Alternativ und ebenfalls bevorzugt weisen die Keramikpartikel eine whisker- und/oder plättchenförmige Gestalt auf. Auf diese Weise können die Keramikpartikel beim Druck oder sintern auftretende Scherkräfte leicht aufnehmen. Zweckmäßig beträgt der größte Durchmesser der whisker- und/oder plättchenförmigen Keramikpartikel höchstens 10 Mikrometer, bevorzugt höchstens 5 Mikrometer.

Die Keramikpartikel sind vorzugsweise mit Aluminiumoxid, Al₂O₃ und/oder Yttriumoxid, Y₂O₃ und/oder Magnesiumoxid, MgO, und/oder Aluminiumnitrid und/oder Bornitrid und/oder YAG- und/oder Glimmermaterial oder einer Mischung der genannten Materialien gebildet.

Bei dem Verfahren gemäß der Erfindung wird die Trennschicht zweckmäßig mittels einer Suspension aufgetragen, insbesondere aufgesprüht, wobei die Suspension vorzugsweise vor einem Druck eines weiteren Grünteils getrocknet wird. Alternativ oder zusätzlich kann eine Trennschicht in Form einer Grünfolie verwendet werden.

Bei dem Verfahren gemäß der Erfindung wird der Stapel von Grünteilen bevorzugt zu einem Stapel von Magnetblechen entbindert und/oder gesintert.

Bei dem erfindungsgemäßen Verfahren wird zwischen Magnetbleche des Stapels von Magnetblechen zweckmäßigerweise Harz eingebracht, vorzugsweise derart, dass das Harz die Magnetbleche voneinander elektrisch isoliert. In dieser Weiterbildung des erfindungsgemäßen Verfahrens kann die Trennschicht zuvor entfernt werden oder die Harzschicht kann zusätzlich zur Trennschicht zwischen die Magnetbleche eingebracht werden.

Geeignet wird bei dem Verfahren gemäß der Erfindung mit dem Stapel von Magnetblechen ein Rotor und/oder ein Stator der elektrischen Maschine gebildet.

Die erfindungsgemäße Anlage und/oder das erfindungsgemäße Fahrzeug weist/en eine elektrische Maschine auf, welche mit einem erfindungsgemäßen Verfahren wie oben erläutert hergestellt ist. Die erfindungsgemäße Anlage und/oder das erfindungsgemäße Fahrzeug weist/en eine elektrische Maschine auf, bei welcher die Magnetbleche des Stapels besonders präzise aufeinander anordbar sind. Folglich sind die erfindungsgemäße Anlage und das erfindungsgemäße Fahrzeug besonders leistungsfähig ausbildbar.

Nachfolgend wird die Erfindung anhand in der Zeichnung dargestellter Ausführungsbeispiele näher erläutert. Es zeigen:
- Fig. 1: einen ersten Schritt des erfindungsgemäßen Verfahrens zur Fertigung einer elektrischen Maschine, bei welchem ein erstes Grünteil eines Magnetblechs gedruckt wird, schematisch in einer perspektivischen Darstellung,
- Fig. 2: einen zweiten Schritt des erfindungsgemäßen Verfahrens, bei welchem eine Suspension mit Keramikpartikeln auf das erste Grünteil gesprüht wird, schematisch in einer perspektivischen Darstellung,
- Fig. 3: eine Konfiguration des ersten Grünteils nach den Verfahrensschritten gemäß den Fig. 1 und 2 schematisch in einer perspektivischen Darstellung,
- Fig. 4: einen weiteren Schritt des erfindungsgemäßen Verfahrens, bei welchem ein weiteres Grünteil nach den Verfahrensschritten gemäß Fig. 1 und 2 auf das erste Grünteil gedruckt wird, schematisch in einer perspektivischen Darstellung,
- Fig. 5: einen weiteren Schritt des erfindungsgemäßen Verfahrens, bei welchem ein weiteres Grünteil nach den Verfahrensschritten gemäß Fig. 1 und 2 auf die vorhandenen Grünteile gedruckt wird, schematisch in einer perspektivischen Darstellung,
- Fig. 6: einen weiteren Schritt des erfindungsgemäßen Verfahrens, bei welchem die in den Verfahrensschritten gemäß der Figuren 1 bis 5 gedruckten Grünteile gemeinsam gesintert werden, sowie
- Fig. 7: einen letzten Schritt des erfindungsgemäßen Verfahrens, bei welchem der bei den Verfahrensschritten gem. Figuren 1 bis 6 gefertigte Magnetblechstapel in eine elektrische Maschine einer erfindungsgemäßen Anlage eingebaut wird.

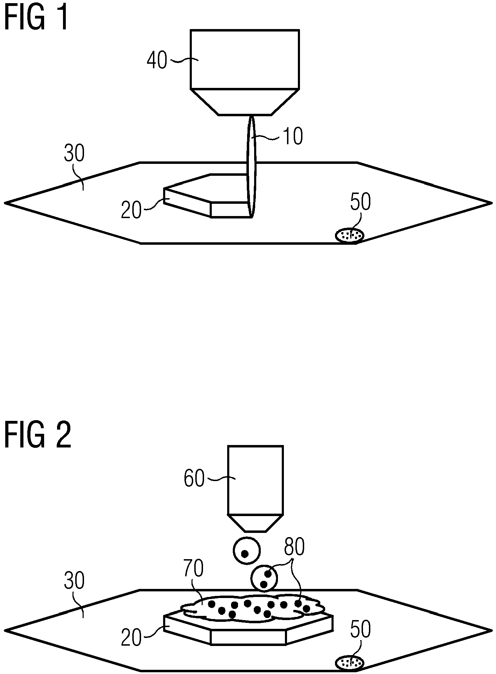

Das in den Figuren 1 bis 7 gezeigte erfindungsgemäße Verfahren ist ein Verfahren zur Fertigung einer elektrischen Maschine mit einem Stapel von Magnetblechen.

Die Magnetbleche werden bei dem erfindungsgemäßen Verfahren in einem Siebdruckverfahren mittels Schablonendrucks gedruckt. Dazu wird bei dem erfindungsgemäßen Verfahren zunächst eine Druckpaste 10 von Metallpulvern, im dargestellten Ausführungsbeispiel von Reineisenpulvern, hergestellt. Mittels der Druckpaste 10 wird ein erster Grünkörper 20 auf ein Substrat 30 gedruckt.

Der Grünkörper 20 soll nach einem nachfolgend näher erläuterten Sinterschritt ein Magnetblech bilden und weist die Gestalt einer dünnen Schicht auf dem Substrat 30 auf, sodass der Grünkörper 20 eine untere Flachseite aufweist, mit welchem er an dem Substrat 30 anliegt und eine von der unteren Flachseite abgewandte und zu dieser sich parallel erstreckende obere Flachseite aufweist.

Zum Druck des Grünkörpers 20 wird ein Drucksieb (nicht explizit in der Zeichnung dargestellt) mit einer Schablone (nicht explizit in der Zeichnung dargestellt) herangezogen, um die Form des Grünkörpers 20 in flächigen Richtungen des Substrats 30 festzulegen. Eine Düse 40 druckt die Druckpaste 10 durch das Sieb auf das Substrat 30. Das Substrat 30 trägt eine Orientierungsmarkierung 50, mittels welcher die Orientierung des Substrats 30 und folglich auch des ersten Grünkörpers 20 leicht erkennbar sind. Erster Grünkörper 20 und Substrat 30 weisen im dargestellten Ausführungsbeispiel eine 6-fache Drehsymmetrie auf. In weiteren nicht eigens dargestellten Ausführungsbeispielen kann eine abweichende Drehsymmetrie, etwa eine 50-fache Drehsymmetrie oder eine sonstige Drehsymmetrie, vorliegen.

Nachdem der erste Grünkörper 20 gedruckt ist, kann der erste Grünkörper 20 optional teilweise oder vollständig getrocknet werden.

Nachfolgend wird mittels einer Düse 60 auf die obere Flachseite des ersten Grünkörpers 20 als Trennschicht eine Suspension 70 aufgesprüht, welche eine flüchtige Trägerflüssigkeit und in der Trägerflüssigkeit gehaltene Keramikpartikel 80 beinhaltet.

Die Keramikpartikel 80 der Suspension 70 weisen im dargestellten Ausführungsbeispiel eine sphärische Gestalt und einen mittleren Partikeldurchmesser von weniger als 5 Mikrometern auf und sind mit Aluminiumoxid, d.h. mit Al₂O₃, gebildet. Alternativ oder zusätzlich können die Keramikpartikel in weiteren Ausführungsbeispielen auch Partikel aus Magnesiumoxid und/oder Yttriumoxid und/oder Aluminiumnitrid und/oder Bornitrid sein. Alternativ oder zusätzlich können die Keramikpartikel YAG- und/oder Glimmerpartikeln umfassen.

Die Größenverteilung der Keramikpartikel ist im dargestellten Ausführungsbeispiel eine bimodale Größenverteilung, d.h. es sind kleinere Keramikpartikel 80 in Sinne einer Feinfraktion der Keramikpartikel vorhanden, welche als Sinterinhibitoren zwischen Grünkörpern 20 fungieren und es sind gröbere Keramikpartikel 80 vorhanden, welche als Abstandshalter zwischen Grünkörper 20 fungieren können und eine elektrische Isolierung zwischen aus den Grünkörpern 20 gefertigten Magnetblechen ermöglichen.

In weiteren, nicht eigens dargestellten Ausführungsbeispielen können die Keramikpartikel eine whisker- oder plättchenförmige Gestalt aufweisen. Anstelle einer Suspension mit den Keramikpartikeln kann in weiteren, nicht eigens gezeigten Ausführungsbeispielen auch eine Grünfolie mit Keramikpartikeln auf den Grünkörper 20 aufgetragen werden.

Die Keramikpartikel 80 bilden eine Trennschicht von weniger als 10 Mikrometern Dicke aus, welche mehr als 75 Prozent der Flachseiten des Grünteils 20 bedeckt.

Im dargestellten Ausführungsbeispiel wurden die Keramikpartikel 80 mittels der Suspension 70 aufgetragen, welche zunächst getrocknet wird, sodass die Trägerflüssigkeit der Suspension 70 verfliegen kann.

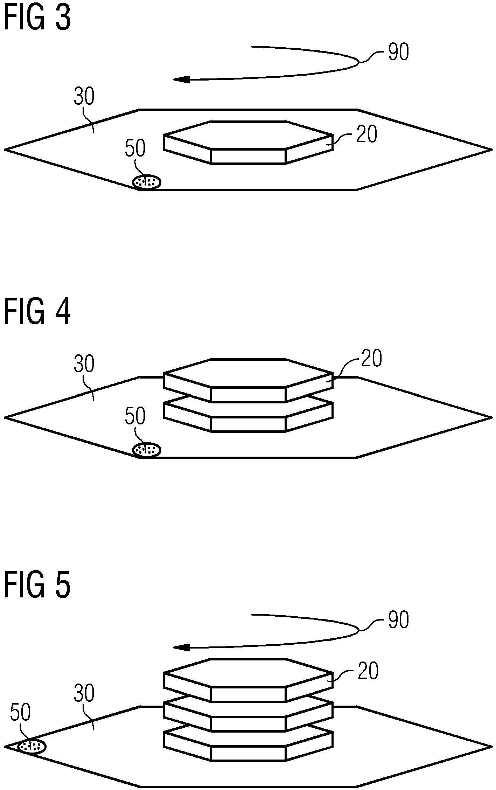

Anschließend wird wie in Fig. 3 dargestellt das Substrat 30 mit dem Grünkörper 20 mit den Keramikpartikeln 80 (in den Figuren 3 bis 7 nicht explizit dargestellt) mittels einer Drehung 90 um 60 Grad, also um 360°/n für eine n-fache Drehsymmetrie, gedreht. Die übrige Anordnung, etwa der Düse 40 für die Druckpaste 10 sowie der Düse 60 für die Suspension 70, bleibt gegenüber der ursprünglichen Anordnung der Figuren 1 und 2 unverändert. Die ordnungsgemäße Drehung kann bei dem erfindungsgemäßen Verfahren leicht mittels der Drehung der Orientierungsmarkierung 50 überwacht werden, welche im dargestellten Ausführungsbeispiel folglich ebenfalls um 60° weitergedreht sein muss.

Nach der Drehung 90 um 60 Grad wird auf die mit Keramikpartikeln 80 gebildeten Trennschicht ein weiterer Grünkörper 20 wie in Fig. 4 gezeigt gedruckt, welcher dieselbe geometrische Gestalt wie der zuvor auf das Substrat 30 gedruckte Grünkörper 20 aufweist. Dabei wird der Grünkörper 20 derart gedruckt, dass er den zuvor auf das Substrat 30 gedruckten Grünkörper 20 in einer Richtung senkrecht zu flächigen Erstreckungen des Substrats 30 betrachtet genau überdeckt. Danach wird abermals eine Trennschicht mit Keramikpartikeln 80 auf diesen weiteren Grünkörper 20 aufgetragen und getrocknet. Dies erfolgt wie bereits anhand der Fig. 2 erläutert.

Nachfolgend wird wie anhand von Fig. 5 dargestellt das Substrat 30 mit den Grünkörpern 20 abermals um 60 Grad gedreht und auf die auf dem obersten Grünkörper 20 befindliche Keramikschicht ein weiterer Grünkörper 20 aufgetragen und eine Trennschicht aufgesprüht.

Auf diese Weise wird weiter verfahren, bis eine vorgegebene Anzahl von Grünkörpern 20 aufeinander abgeschieden worden ist. Wie zuvor beschrieben wird die Anordnung von bereits gedruckten Grünkörpern 20 um einem Winkel von 60° gedreht, bevor ein neuer Grünkörper 20 gedruckt wird. Nach dem letzten Druck eines Grünkörpers 20 wird auf eine weitere Aufbringung einer Trennschicht mit Keramikpartikeln 80 verzichtet.

Auf diese Weise bilden die aufeinander gedruckten und jeweils durch Trennschichten mit Keramikpartikeln 80 voneinander getrennten Grünkörper 20 einen Stapel 100 von Grünkörpern 20. Der derart gebildete Stapel 100 von Grünkörpern 20 wird nun gemeinsam als Stapel 100 entbindert und in einem Sinterofen 110 gesintert. Auf diese Weise werden die Grünkörper 20 zu einem Stapel 100 von Magnetblechen gesintert.

Optional können in einem weiteren Schritt die Keramikpartikel 80 zwischen den Magnetblechen entfernt werden.

Optional kann der Stapel 100 in Harz getaucht werden, sodass in dem Stapel 100 von Magnetblechen die einzelnen Magnetbleche zuverlässig voneinander elektrisch isoliert sind und der Stapel 100 mechanisch gefestigt wird.

Der Stapel 100 wird nun in an sich bekannter Weise mit einer Welle (nicht explizit gezeigt) versehen, sodass er einen Rotor 120 bildet. Der Rotor 120 wird in an sich bekannter Weise gemeinsam mit einem Stator 130 zu einer erfindungsgemäß gefertigten Maschine 140 verbaut, welche im gezeigten Ausführungsbeispiel ein erfindungsgemäß gefertigter Elektromotor ist. Alternativ oder zusätzlich kann die erfindungsgemäß gefertigte Maschine 140 einen elektrischen Generator bilden.

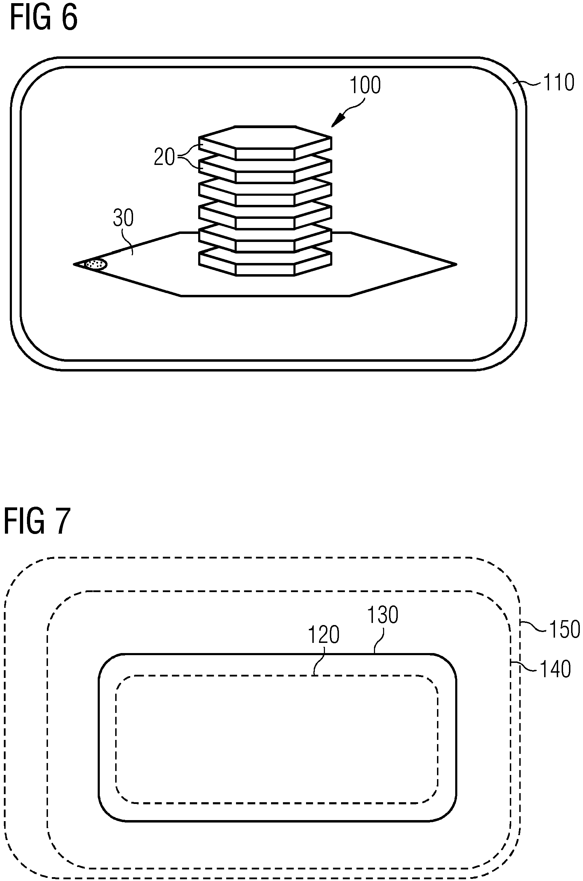

Die in Figur 7 dargestellte Anlage 150 ist eine Industrieanlage, die die erfindungsgemäß gefertigte elektrische Maschine 140 aufweist. Alternativ kann anstelle einer Anlage 150 ein autonomes Lagerfahrzeug vorhanden sein, welche die erfindungsgemäß gefertigte elektrische Maschine 140 aufweist.

## Patentansprüche

1. Verfahren zur Fertigung einer elektrischen Maschine (140) mit einem Stapel (100) von Magnetblechen, bei welchem ein Stapel von Grünteilen (20) von Magnetblechen gefertigt wird, wobei
- ein erstes Grünteil (20) des Stapels gedruckt wird,
- wobei auf das erste Grünteil (20) eine Trennschicht aufgebracht wird und
- bei welchem auf das erste Grünteil (20) mit der Trennschicht mindestens ein zweites Grünteil (20) eines Magnetblechs gedruckt wird,
wobei anschließend die Grünteile (20) gemeinsam gesintert werden.

2. Verfahren nach dem vorhergehenden Anspruch, bei welchem auf das zweite Grünteil (20) des Stapels (100) abermals eine Trennschicht aufgebracht wird und auf das zweite Grünteil (20) mindestens ein weiteres Grünteil (20) des Stapels (100) gedruckt wird.

3. Verfahren nach den beiden vorhergehenden Ansprüchen, bei welchem die Verfahrensschritte des vorhergehenden Anspruchs einer oder mehreren Wiederholungen unterzogen werden, wobei das weitere Grünteil (20) jeweils an die Stelle des zweiten Grünteils (20) tritt.

4. Verfahren nach einem der vorhergehenden Ansprüche, bei welchem die Grünteile (20) des Stapels (100) eine n-fache Drehsymmetrie aufweisen und bereits gedruckte Grünteile (20) um einen Winkel von 360°/n oder ein Vielfaches dieses Winkels gedreht werden, bevor ein weiteres Grünteil (20) des Stapels (100) gedruckt wird.

5. Verfahren nach einem der vorhergehenden Ansprüche, bei welchem eines, mehrere oder sämtliche der Grünteile (20) mittels Sieb- und/oder Schablonendrucks gedruckt werden.

6. Verfahren nach einem der vorhergehenden Ansprüche, bei welchem die Trennschicht mit Keramikpartikeln (80) gebildet wird und/oder mit einer Grünteilbedeckung von mindestens 75 Prozent aufgetragen wird und/oder mit Aluminiumoxid und/oder Yttriumoxid und/oder Magnesiumoxid und/oder mit Aluminiumnitrid und/oder Bornitrid und/oder YAG- und/oder Glimmermaterialien gebildet wird.

7. Verfahren nach einem der vorhergehenden Ansprüche, bei welchem die Trennschicht mittels einer Suspension (70) aufgetragen werden, wobei die Suspension (70) vorzugsweise vor einem Druck eines weiteren Grünteils (20) getrocknet wird.

8. Verfahren nach einem der vorhergehenden Ansprüche, bei welchem der Stapel (100) von Grünteilen (20) zu einem Stapel (100) von Magnetblechen gesintert wird.

9. Verfahren nach einem der vorhergehenden Ansprüche, bei welchem zwischen Magnetbleche des Stapels (100) von Magnetblechen Harz eingebracht, vorzugsweise derart, dass das Harz die Magnetbleche voneinander elektrisch isoliert.

10. Verfahren nach einem der vorhergehenden Ansprüche, bei welchem mit dem Stapel (100) von Magnetblechen ein Rotor (120) und/oder ein Stator (130) der elektrischen Maschine (140) gebildet wird.

11. Anlage oder Fahrzeug, aufweisend eine elektrische Maschine (140), welche nach einem der vorhergehenden Ansprüche hergestellt ist.
